# FASCICULE DE BREVET EUROPEEN

(11) **EP 3 667 901 B1**
(45) Date de publication et mention de la délivrance du brevet: **06.07.2022**
(21) Numéro de dépôt: 19213072.2
(22) Date de dépôt: 03.12.2019
(51) Int. Cl.: H02S 20/32

(54) **SYSTÈME DE PRODUCTION D'ÉNERGIE COMPORTANT DES PANNEAUX SOLAIRES S'ORIENTANT À L'AIDE D'UNE MONTURE DOTÉE D'UNE LIAISON HÉLICOÏDALE**
ENERGIEPRODUKTIONSSYSTEM MIT SOLARMODULEN WELCHE SICH MIT EINER VORRICHTUNG MIT EINER HELIOKOIDALEN VERBINDUNG ORIENTIEREN
PRODUCTION SYSTEM FOR ENERGY WITH SOLAR MODULES WHICH ORIENT THEMSELVES WITH A MOUNT HAVING A HELICOIDAL LINK

(30) Priorité: 13.12.2018 FR 1872870
(43) Date de publication de la demande: 17.06.2020
(73) Titulaire: Groupe Okwind, 35500 Vitré (FR)
(72) Inventeur: BUGNI, Yoran, 35000 RENNES (FR)
(74) Mandataire: Vidon Brevets & Stratégie

(56) Documents cités:
- EP-A2- 2 154 449
- CN-A- 106 788 181
- CN-U- 204 615 734
- US-A1- 2003 169 200

## Description

### 1. DOMAINE DE L'INVENTION

La présente invention concerne le domaine des systèmes de guidage pour maintenir et déplacer des dispositifs d'absorption de lumière du soleil, en particulier des modules photovoltaïques. La présente invention concerne plus particulièrement des systèmes dont le moyen d'orientation comporte des rails cintrés dont les projections sur le plan passant par la surface des panneaux se coupent et qui sont entraînés en translation le long de leur axe curviligne.

### 2. ARRIÈRE-PLAN TECHNOLOGIQUE

De nos jours, la production d'électricité par des énergies renouvelables est fortement favorisée. Les panneaux photovoltaïques permettent de convertir le rayonnement lumineux provenant du soleil en courant électrique. Ce moyen de production est utilisable dans différentes régions, excluant les zones situées dans les régimes de vent fort ou tempête. Pour augmenter la production d'électricité, on peut augmenter la surface des panneaux ou améliorer leur structure cristalline pour en augmenter le rendement. Un autre moyen consiste à utiliser la technologie biface qui permet de capter le rayonnement à l'arrière du panneau et à le convertir également en énergie électrique. De cette manière, les panneaux récupèrent le rayonnement indirect réfléchi par le sol, ou « albédo » et le rajoute pour sa production d'électricité.

Un autre moyen d'augmenter la production consiste en ce que l'orientation des panneaux suive de manière fiable et précise le mouvement du soleil dans le ciel afin de garantir une réception optimale de la lumière du soleil. Pour orienter les panneaux, ceux-ci sont montés en haut d'un mât rotatif, les panneaux peuvent tourner autour d'un mât vertical fixé au sol et pivoter autour d'un axe horizontal fixé en haut du mât. Un capteur permettant le suivi du soleil via un automate qui calcule sa position en azimut et en élévation. Le mouvement de guidage des panneaux consiste alors à tourner les panneaux autour de deux axes, à savoir un axe d'azimut et un axe d'élévation. L'expérimentation a montré que des panneaux orientables produisent 70% de plus que des panneaux fixes, au même endroit, à surfaces égales et technologie identique.

De tels moyens d'orientation de panneaux solaires sont par exemple décrits dans le modèle d'utilité CN204615734U et dans la demande de brevet CN106788181A.

Les rotations sont contrôlées par des moteurs commandés par une unité de contrôle. Cette unité de contrôle peut également gérer la production en comptabilisant l'énergie produite et en dressant des historiques de production. L'unité de contrôle peut également recevoir des informations météorologiques en provenance de capteurs et/ou d'un serveur distant. Si des vents violents sont présents sur le site de production, alors les panneaux sont mis dans une position de sécurité, par exemple complétement à l'horizontal. De cette façon, les vents qui sont le plus souvent parallèles au sol, exercent une force relativement faible sur les flancs des panneaux et non sur leur surface où elle serait plus importante. Il est donc préférable que l'ensemble formé par les panneaux solaires et leurs supports présente une épaisseur la plus faible possible.

De plus, ce type de monture est assez fragile car les efforts se répercutent en des points bien précis, comme celui du pivot en haut du mât et nécessite une maintenance importante. L'installation nécessite un fort ancrage car le mât supportant les panneaux solaires peut être assez haut.

### 3. OBJECTIFS DE L'INVENTION

Il existe donc un réel besoin d'un système de pointage d'équipements solaires dont l'épaisseur de l'ensemble formé par les panneaux et leurs supports présente la plus faible valeur possible.

Il existe également un réel besoin d'un système de pointage qui est capable d'orienter rapidement la surface des panneaux pour qu'elle pointe vers le soleil, et un système de production suffisamment léger pour être facilement transporté et placé sur son aire de production.

### 4. PRESENTATION DE L'INVENTION

Selon l'invention, il est proposé un système de production d'énergie électrique selon la revendication 1 et comportant entre autres un mât destiné à être ancré au sol, au moins un panneau solaire fixé par ses bords dans un cadre orientable pour former une surface plane et un moyen d'orientation dudit cadre pour pointer lesdits panneaux dans une direction déterminée, caractérisé en ce que ledit moyen d'orientation comporte une base en rotation autour du mât vertical à l'aide d'un premier actionneur, le cadre étant monté pivotant sur la base rotative, ledit cadre comportant une vis sans fin animée en rotation par un second actionneur, la vis sans fin étant doté d'un écrou solidarisé par un pivot à une extrémité d'une bielle, l'autre extrémité de ladite bielle étant montée pivotante sur la base rotative, le déplacement de l'écrou le long de la vis sans fin par la rotation du second actionneur faisant varier l'inclinaison du cadre. De cette manière, les éléments pour orienter les panneaux solaires sont plus compacts et offrent peu de prise au vent.

Selon un premier mode de réalisation, le cadre est doté d'un profilé rectiligne comportant une gorge s'étendant longitudinalement dans ledit profilé et dans laquelle s'insère au moins ladite vis sans fin et la bielle dans la position où les panneaux sont dans une position la plus proche de l'horizontalité. De cette manière, les éléments qui participent à l'inclinaison du cadre se situe dans son épaisseur, contribuant ainsi à conférer une faible épaisseur à l'ensemble du cadre et des panneaux.

Selon un autre mode de réalisation, le second actionneur est fixé à l'extrémité la plus basse de la vis sans fin lorsque les panneaux sont dans une position relevée.

Selon un autre mode de réalisation, le sommet de la base rotative est oblong et incliné vers l'arrière, le pivotement de la bielle sur la base rotative étant assurée par une liaison pivot fixée sur le pourtour de la base tournante en son point le plus bas.

Selon un premier mode de réalisation, le système de production d'énergie comporte un moyen de contrôle intégré comportant un moyen de géolocalisation, de préférence du type GPS, et un moyen de communication avec un serveur distant, le moyen de contrôle émettant les coordonnées géographiques du système fournies par le moyen de géolocalisation et recevant du serveur les coordonnées de pointage du support en fonction du lieu et d'une information horaire également transmise, le moyen de contrôle commandant les motorisations pour orienter les panneaux à l'aide de coordonnées transmises. De cette manière, les calculs d'orientation des panneaux sont effectués à distance et ne consomment pas de la ressource locale.

Selon un autre mode de réalisation, le moyen de contrôle émet à intervalle régulier des informations de fonctionnement au serveur distant, dont la quantité d'énergie produite. De cette manière, il est possible de consulter à distance des données statistiques de production du système.

Selon un autre mode de réalisation, le moyen de contrôle commande régulièrement les motorisations en azimut et en élévation pour orienter les panneaux, la fréquence des commandes en azimut étant plus rapide que la fréquence des commandes en élévation à la mi-journée et, la fréquence des commandes en élévation étant plus rapide que la fréquence des commandes en azimut au lever et au coucher du soleil. De cette manière, la fréquence des commandes faisant varier un certain paramètre dépend du moment dans la journée et du fait que durant ce moment, les variations de ce paramètre sont importantes.

Selon un autre mode de réalisation, le moyen de contrôle commande les motorisations pour orienter les panneaux selon une position de mise en sécurité consécutivement à la réception d'un signal du serveur signalant des conditions atmosphériques particulières. De cette manière, les panneaux sont mis en sécurité lorsque la force du vent atteint un niveau trop important.

Selon un autre mode de réalisation, le système de production d'énergie comporte un moyen de transmission d'information vers un appareil destiné à consommer l'énergie produite par ledit système, le moyen de contrôle recevant des informations impactant la production d'énergie du système au cours d'une durée commençant à partir du moment présente et émettant vers ledit appareil des prévisions de production d'énergie au cours de cette durée. De cette manière, il est possible d'anticiper une future production d'énergie et d'en faire bénéficier certains appareils qui ont consomme une quantité importante.

Selon un autre mode de réalisation, le système de production d'énergie comporte un inclinomètre deux axes et une horloge, ledit moyen de contrôle calculant les données de commandes des deux motorisations en fonction des données d'inclinaison fournies par le capteur, de coordonnées de pointage du support élaborées en fonction du lieu où se situe le système et de l'heure et de la date fournie par l'horloge. De cette manière, les inclinaisons droite/gauche et avant/arrière sont calculées en fonction de la position du soleil au cours de la journée.

Selon un autre mode de réalisation, les panneaux sont du type produisant de l'énergie par un rayonnement reçu des deux côtés. De cette manière, l'efficacité des panneaux en termes de production d'énergie est améliorée.

Selon une variante de réalisation, l'invention concerne un système de production d'énergie électrique comportant une base fixe servant d'ancrage au sol, une pluralité de panneaux solaires fixés sur un support orientable pour former une surface plane et un moyen d'orientation dudit support pour pointer lesdits panneaux dans la direction du soleil. Ledit moyen d'orientation comporte deux rails cintrés dont les projections sur le plan passant par la surface des panneaux se coupent, de préférence orthogonalement, les extrémités des rails étant fixées au support, une première motorisation entraînant en rotation le premier rail par rapport à la base fixe et une seconde motorisation entraînant en rotation le second rail par rapport au premier rail. Selon cette variante de réalisation, la monture pour orienter les panneaux solaires est plus rapide à monter et l'installation des panneaux est optimisée et plus robuste.

Selon un autre mode de réalisation, les axes des deux rails cintrés suivent une courbe circulaire. De cette manière, le pivotement autour d'un axe de rotation est plus facile à obtenir.

Selon un autre mode de réalisation, les projections des deux rails cintrés sur le plan passant par la surface des panneaux se coupent orthogonalement. De cette manière, les calculs pour la commande des actionneurs sont facilités.

### 5. DESCRIPTION DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 représente un premier exemple de vue en coupe d'un système de production d'énergie avec des panneaux en position inclinée,
- la figure 2 représente une vue en coupe d'un exemple de réalisation du système de production dans laquelle les panneaux solaires sont à l'horizontal,
- la figure 3 illustre une vue en coupe du profilé au centre du cadre supportant les panneaux solaires, selon un premier exemple de réalisation,
- la figure 4 illustre une vue longitudinale du profilé, selon ce premier exemple de réalisation,
- la figure 5 présente une vue en perspective de l'arrière d'un système de production d'énergie selon ce premier exemple de réalisation,
- la figure 6 présente une vue en perspective de face d'un système de production d'énergie selon ce premier exemple de réalisation,
- la figure 7 présente un schéma des différents composants de la carte électronique embarquée sur le système de production selon un exemple de réalisation,
- la figure 8 représente un exemple d'ordinogramme des principales étapes pour l'installation du système de production,
- la figure 9 présente une vue en perspective d'un système de production d'énergie électrique par des panneaux solaires orientables, selon une variante de réalisation ne faisant pas partie de l'invention,
- la figure 10 présente une vue de face du système de monture pour orienter les panneaux solaires selon cette variante de réalisation,
- la figure 11 présente une vue de profil du système de monture pour orienter les panneaux solaires selon cette variante de réalisation,
- la figure 12 représente une vue de l'arrière d'un système de production d'énergie présentant une autre configuration de panneaux de cette variante de réalisation,
- la figure 13 représente une vue de face de ce système de production d'énergie selon cette variante de réalisation.

### 6. DESCRIPTION DETAILLEE D'UN MODE DE REALISATION

Sur toutes les figures du présent document, les éléments (ou les étapes) identiques sont désignées par une même référence numérique.

### 6.1 Principe général

Il est proposé un système de production d'énergie électrique comportant un mât destiné à être ancré au sol, au moins un panneau solaire fixé par ses bords dans un cadre orientable pour former une surface plane et un moyen d'orientation dudit cadre pour pointer lesdits panneaux dans une direction déterminée, ledit moyen d'orientation comporte une base en rotation autour du mât vertical à l'aide d'un premier actionneur, le cadre étant monté pivotant sur la base rotative, ledit cadre comportant une vis sans fin animée en rotation par un second actionneur, la vis sans fin étant doté d'un écrou solidarisé par un pivot à une extrémité d'une bielle, l'autre extrémité de ladite bielle étant montée pivotante sur la base rotative, le déplacement de l'écrou le long de la vis sans fin par la rotation du second actionneur faisant varier l'inclinaison du cadre.

### 6.2 Mode préféré de réalisation

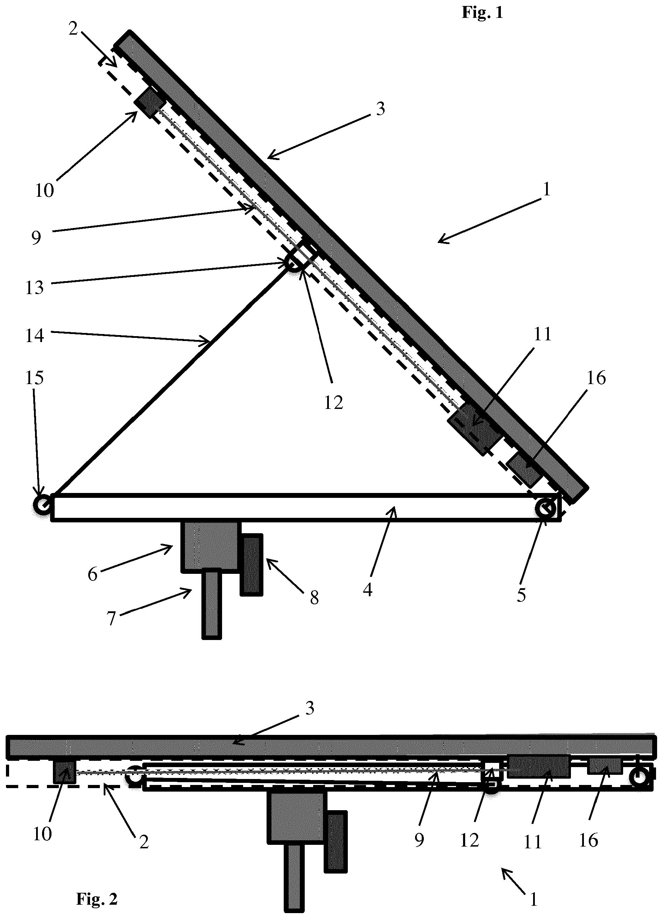

On présente maintenant, en relation avec la **Fig. 1**, un premier exemple de vue en coupe d'un système de production d'énergie avec des panneaux en position inclinée. Ce système suit la course de soleil, il est en cela appelé « suiveur ». Pour cela, le système 1 comporte un cadre 2 formant un plan sur lequel au moins un panneau solaire 3 est fixé, ledit cadre 2 qui est représenté en pointillé sur la figure permettant de voir à travers, est mobile en azimut et en élévation et oriente sa surface de façon à pointer les panneaux dans une direction déterminée, préférentiellement vers le soleil. Le cadre 2 est solidarisé à une base tournante 4 par une première liaison pivotante 5. La base tournante 4 est montée sur une liaison pivot dite azimutale 6 fixée en haut d'un mât vertical 7, la liaison pivot azimutale 6 comporte une couronne crantée couplée à un actionneur 8 permettant la rotation de la base tournante 4 autour d'un axe vertical. Une vis sans fin 9 est placé dans l'épaisseur et au milieu du cadre 2, une extrémité de cette vis étant fixée à un guide de rotation 10, l'autre extrémité étant couplé à un second actionneur 11, dit « d'inclinaison ». Un écrou 12 est enfilé dans la vis sans fin et est bloqué en rotation au sein d'une gorge et par des rails de guidage (non représentés sur la figure) formant une liaison hélicoïdale. Le second actionneur anime en rotation la vis sans fin entraînant en translation l'écrou 12 d'une extrémité où ce dernier entre en contact avec le guide de rotation, à une autre extrémité où l'écrou 12 est le plus proche de l'actionneur d'inclinaison 11. Avantageusement, l'actionneur d'inclinaison 11 est placé à proximité de la première liaison pivotante 5. L'écrou 12 comporte une seconde liaison pivot 13 reliée à une extrémité d'une bielle 14, l'autre extrémité de la bielle étant reliée à une troisième liaison pivot 15 fixé à la base tournante 4. Les première et troisième liaisons pivot 5 et 15 sont avantageusement fixées à des extrémités opposées de la base tournante 4, ou aux extrémités d'un diamètre si cette base tournante est de forme oblongue.

Dès lors, le déplacement de l'écrou 12 le long de la vis sans fin provoque l'inclinaison de la bielle 14 ainsi que du cadre 2, permettant ainsi d'orienter en inclinaison l'au moins un panneau solaire 3. Les actionneurs 8 et 11 permettent d'orienter respectivement sur le plan horizontal et vertical les panneaux solaires dans la bonne direction.

Des capteurs 16 sont fixés sur le cadre 2 pour détecter la direction vers laquelle les panneaux solaires sont orientés. Ces capteurs sont notamment :
- un capteur d'inclinaison (typiquement un gyroscope électronique),
- un capteur d'orientation (typiquement une boussole électronique),

Ces capteurs sont éventuellement rassemblés dans un seul composant.

La **Fig.2** présente une vue en coupe d'un exemple de réalisation du système de production dans laquelle les panneaux solaires sont à l'horizontal. Cette position est dite de sécurité, permettant aux panneaux de présenter le moins possible de prise au vent. Le cadre 2 présente un profilé rectiligne comportant une gorge dans laquelle s'insère à la fois la vis sans fin 9, le guide 10, l'actionneur d'inclinaison 11, l'écrou 12, ainsi que la bielle 14 dans la position où l'écrou 12 est le plus proche de l'actionneur d'inclinaison. De cette manière, les éléments qui participent à l'inclinaison du cadre se situe dans son épaisseur, contribuant ainsi à conférer une faible épaisseur à l'ensemble du cadre et des panneaux. Les capteurs 16 étant fixés au cadre, fournissent une indication exacte de la direction vers laquelle les panneaux solaires sont orientés.

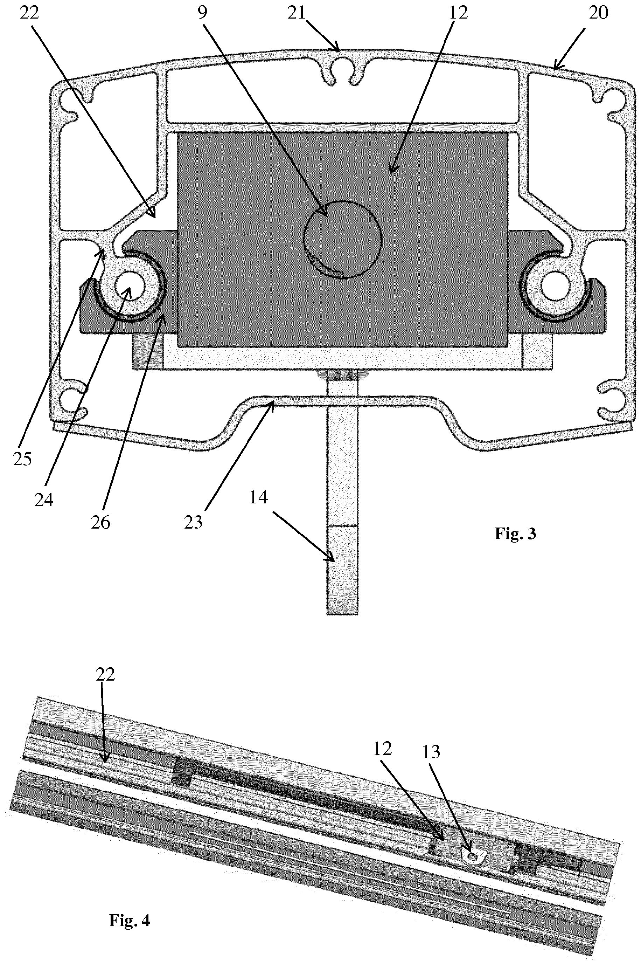

On présente maintenant, en relation avec la **Fig. 3**, une vue en coupe du profilé au centre du cadre supportant les panneaux solaires, selon un premier exemple de réalisation. Selon cet exemple, le cadre 2 possède une forme rectangulaire comportant au centre un profilé droit 20 s'étendant dans la largeur du cadre et mécaniquement connecté au niveau du milieu des deux longueurs du cadre. Le profilé droit 20 comporte un capot 21 en partie supérieure pour protéger des intempéries telles que la pluie, la grêle, la neige, ...Le profilé 20 est ouvert par en dessous et présente une gorge 22 s'étendant longitudinalement. Cette gorge est en partie fermée par un couvercle 23.

Le profilé comporte deux rails 24 de section cylindrique qui s'étendent de chaque côté de la gorge 22 et qui sont reliés au reste du profilé par une lèvre 25. La vis sans fin 9 est visible en coupe sur la **Fig.3** et est entouré par l'écrou 12. L'écrou de forme rectangulaire pour épouser la forme de la gorge se prolonge de chaque côté par deux coulisseaux 26 en forment d'arceaux qui viennent enserrés les rails 24 et bloquent la rotation de l'écrou lorsque la vis sans fin 9 tourne. La surface intérieure des coulisseaux, qui est au contact avec le rail 24, est avantageusement recouvert d'un agent glissant, du tétra-fluoroéthylène par exemple. La rotation de la vis sans fin 9 provoque un déplacement perpendiculaire au plan de la figure, en avant ou en arrière. La bielle 14 qui est reliée à la seconde liaison pivot 13 fixée sur l'écrou, passe à travers une rainure longitudinale pratiquée dans le couvercle 23.

Les panneaux solaires sont fixés sur le cadre, de chaque côté du profilé 20. Comme on peut le voir sur la **Fig. 3**, les éléments qui participent à l'inclinaison du cadre se logent dans la gorge 22, ils sont ainsi protégés des intempéries et offrent peu de prise aux vents.

La **Fig. 4** est une vue longitudinale du profilé, selon ce premier exemple de réalisation. On peut voir sur cette figure la gorge 22 dans laquelle coulisse l'écrou 12. La seconde liaison pivot 13 fixée sur l'écrou et reliée à la bielle 14 est également visible.

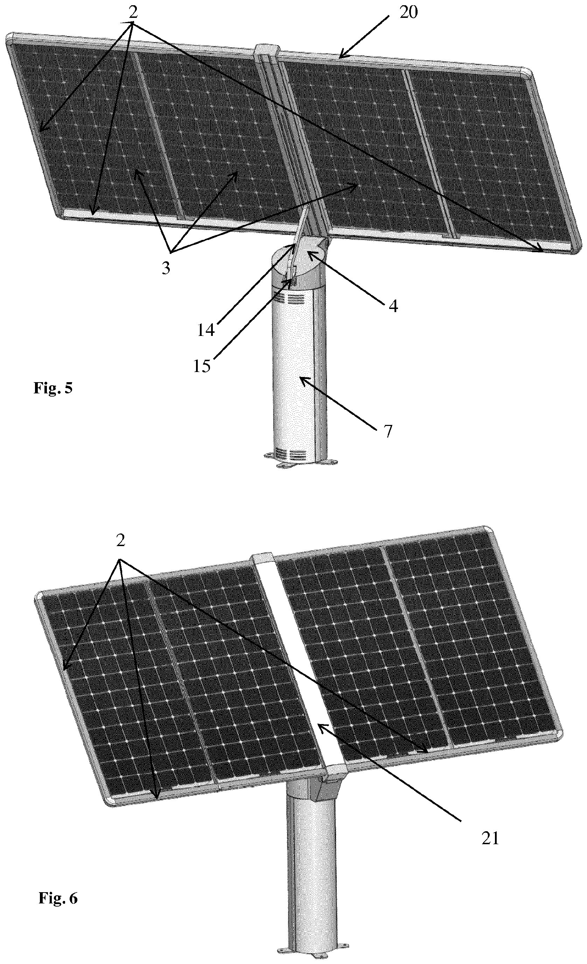

La **Fig. 5** représente une vue en perspective de l'arrière d'un système de production d'énergie selon ce premier exemple de réalisation. Le profilé 20 apparaît au centre du cadre 2 entouré par quatre panneaux solaires 3, deux de chaque côté. Le pourtour extérieur du 2 possède une épaisseur comparable à celle du profilé au centre. Selon cet exemple de réalisation, le sommet de la base tournante 4 est de forme oblongue et inclinée vers l'arrière, la figure montre la troisième liaison pivot 15 qui fixée sur le pourtour de la base tournante 4 en son point le plus bas, cette liaison pivot étant mécaniquement reliée à l'extrémité de la bielle 14. La base tournante se prolonge dans sa partie inférieure par le mât vertical 7 qui est sensiblement du même diamètre, l'actionneur pour la rotation de la base est logé à l'intérieur du mât.

Le fait d'utiliser un cadre pour fixer les panneaux solaires au niveau de leurs bord, laisse visible l'arrière des panneaux. De cette manière, et selon cet exemple de réalisation, il est avantageux d'utiliser des panneaux solaires capable de convertir en énergie un rayonnement lumineux reçu des deux côtés.

La **Fig. 6** représente en perspective une vue de face d'un système de production d'énergie selon ce premier exemple de réalisation. Les panneaux solaires sont fixés au niveau de leur pourtour au cadre 2 et sont disposés en nombre égale de part et d'autre du profilé dont le capot 21 est visible sur la figure.

Selon une variante de réalisation, la base tournante se prolonge largement au-dessus du mât 7 pour supporter plusieurs profilés et ainsi élargir la superficie de panneaux solaires. Dans ce cas, la rotation des vis sans fin doit être synchronisée de façon que les profilés associés pivotent avec la même valeur d'inclinaison.

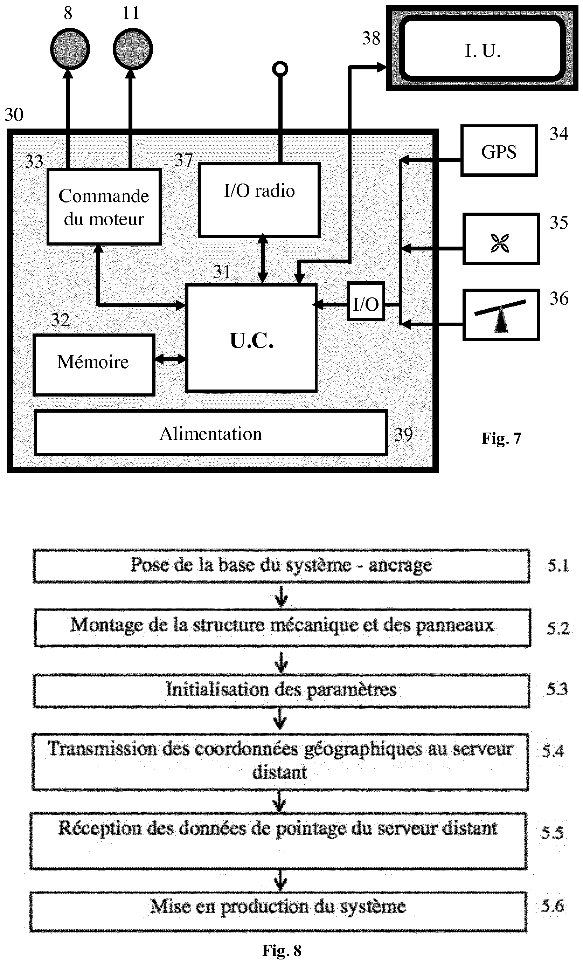

La **Fig. 7** représente un schéma des différents composants d'une carte de contrôle embarquée sur le système de production pour commander les actionneurs 8 et 11. La carte 30 comporte un contrôleur 31 associé à une mémoire 32 de programme et de données. Le contrôleur 21 communique avec un module 23 pour commander les deux actionneurs 8 et 11. Ce module comporte un capteur pour mesurer l'intensité du courant parcouru par l'actionneur et ainsi détecter une éventuelle surconsommation, révélateur d'une panne. La carte 30 comporte un module d'entrée sortie l/0 permettant de recevoir des données environnementales provenant d'un module de géolocalisation 34 (par exemple, un module GPS, de capteurs d'inclinaison 36 deux axes permettant de déterminer les inclinaisons droite/gauche et avant/arrière. En utilisant un capteur de position absolu solidarisé avec la surface photovoltaïque, il est possible de transmettre des corrections d'azimut et d'élévation aux actionneurs et ainsi contrôler le parfait positionnement en direction du soleil. En solidarisant le capteur de position à la surface des panneaux, celui-ci capte et mesure leurs mouvements et la carte de contrôle peut vérifier les mouvements générés par les actionneurs, se positionner selon les résultats des calculs du contrôleur et éventuellement détecter des déficiences.

Tout cet ensemble de capteurs procurent des indications sur la position du système 1 et permettent de calculer les coordonnées azimutales et d'élévation.

La carte 30 dispose également d'un circuit de communication 37 utilisant la radio. Ce circuit permet des communications bidirectionnelles sans fil à courte portée (en s'appuyant par exemple sur la norme WIFI ou la norme BLUETOOTH), et/ou des communications bidirectionnelles sans fil avec un réseau téléphonique (par exemple le réseau GSM - Global System for Mobile). Selon un perfectionnement, le système GSM établit par triangulation la position du système 1 et la transmet au circuit de communication 37, dans ce cas, il n'est pas utile de disposer d'un module de géolocalisation 34 au niveau du système 1. Le circuit de communication bidirectionnel est également utilisé pour transmettre la position du système 1 à un serveur distant, pour améliorer le suivi et recevoir en retour des informations liées à son environnement ou des mises à jour.

La carte 30 dispose aussi d'une interface utilisateur 38 U.I. permettant de recevoir des commandes des utilisateurs et d'afficher des informations. L'interface utilisateur peut être constitué d'un écran de visualisation et un clavier déporté, l'écran peut aussi être tactile. Selon une variante de réalisation, l'interface utilisateur U.I. est téléchargée dans un ordiphone (traduction française du mot anglais « smartphone ») qui communique avec la carte électronique avec l'aide du module 37 (par Wifi ou Bluetooth par exemple). Selon cette variante, l'utilisateur voit les menus affichés et introduit des commandes sur un écran tactile. Cette interface utilisateur est surtout utilisée lors de la mise en place et de l'initialisation du système 1. La carte dispose d'un module d'alimentation 39 recevant une tension provenant de la batterie du véhicule ou de toute autre moyen de fourniture d'énergie, et fournissant une tension utilisable par les différents composants de la carte 30.

La **Fig. 8** représente un exemple d'ordinogramme des principales étapes pour l'installation du système de production. A l'étape 5.1, la base tournante 4 est posée horizontalement sur le sol ou une terrasse et éventuellement lestée par des objets lourds posés dessus. Selon une variante, une masse en béton est coulée dans le sol en faisant émerger des tiges filetées pour l'ancrage du pied 7. Les canalisations électriques pour la fourniture au réseau de l'électricité produite sont réalisées et posées lors de cette étape.

Le montage mécanique commence à l'étape 5.2 par la fixation du pied 7 au sol au niveau du point d'ancrage. Puis, l'assemblage du support orientable 4 est réalisé. Les panneaux sont alors fixés sur dans le cadre 2, de chaque côté du profilé 20. Les canalisations électriques sont raccordées à l'onduleur et à la carte de contrôle qui peut être ainsi alimentée.

L'initialisation de la carte de contrôle 30 peut alors commencer en utilisant l'interface utilisateur 38 (étape 5.3). L'horloge interne de la carte de contrôle est mise à jour par une communication avec un réseau (GPS, GSM ou Internet via le Wifi ou Ethernet). La liaison bidirectionnelle gérée par le module 37 est initialisée et testée. La localisation du système 1 s'effectue en utilisant soit un module de géolocalisation embarquée (module GPS par exemple), soit en récupérant une localisation suite à des communications avec un réseau cellulaire (réseau GSM par exemple).

Des vérifications sont alors effectuées parmi lesquelles on peut trouver :
- vérification de la communication,
- vérification du paramétrage général de pilotage,
- vérification des déplacements selon un premier axe,
- vérification des déplacements selon un second axe non parallèle avec le premier,
- mise en service de l'onduleur et vérification de la production électrique.

Toutes les étapes précédentes sont avantageusement automatisées ou accompagnées par un opérateur, l'interface utilisateur se contentant de fournir à cet opérateur un compte-rendu d'exécution et un ordre de marche à suivre si besoin.

La carte de contrôle se connecte à un serveur distant à travers une liaison radio bidirectionnelle (GSM par exemple) et transmet les coordonnées géographiques élaborées par le circuit de géolocalisation 34 (étape 5.4).

Ce serveur distant est hébergé dans un site spécialisé accessible par un réseau, Internet par exemple, ce serveur est avantageusement géré par le fournisseur de systèmes de production. A l'étape 5.5, le serveur distant transmet la validation de mise en service et effectue les derniers paramétrages avec l'utilisateur via l'interface utilisateur si besoin. Un système de régulation effectue ensuite la mise en service du logiciel embarqué et calcule les coordonnées de pointage du support en fonction du lieu où situe le système. Les coordonnées sont les résultats de plusieurs équations ayant pour paramètres d'entrée au moins l'heure et la date en cours. A partir de ces coordonnées, le système de régulation calcule les paramètres d'azimut et d'élévation. Une fois que ces données sont calculées, le système 1 est apte à entrer en production et à fonctionner de façon autonome (étape 5.6).

Comme on peut le constater, les étapes d'initialisation peuvent s'effectuer automatiquement ou accompagnées, et se déroulent consécutivement à la mise sous tension du système. Après raccordement au réseau internet, le système est entièrement autonome dans son fonctionnement et communique aisément avec les éléments qui l'entourent soit pour créer des alertes soit pour aider l'utilisateur dans sa démarche d'autoconsommation - meilleure valorisation du signal de production d'électricité.

En production la carte de contrôle 30 calcule les données de commande des deux actionneurs 8 et 11 en fonction des données d'inclinaison absolues fournies par le capteur 36, des coordonnées de pointage du support fournies par l'inclinomètre et de l'heure et de la date fournies par l'horloge. La carte de contrôle émet périodiquement des commandes vers les deux actionneurs 8 et 11 pour que les panneaux pointent constamment vers le soleil.

Selon un perfectionnement, la carte de contrôle 30 émet vers le serveur distant et à intervalle régulier des informations de fonctionnement, dont la quantité d'énergie produite. De cette manière, un propriétaire de système de production 1 peut, en se connectant à ce serveur distant, recevoir un historique de la production de son équipement. Au cours de ces communications bidirectionnelles, le serveur distant peut aussi transmettre des mises à jour de données.

Selon un autre perfectionnement, la carte de contrôle 30 commande régulièrement les motorisations en azimut et en élévation pour orienter les panneaux. En milieu de journée, le soleil se déplace plus en azimut et au début et fin de journée, il se déplace plus en élévation. De ce fait, la fréquence des commandes en azimut est plus rapide que la fréquence des commandes en élévation à la mi-journée. De même, la fréquence des commandes en élévation est plus rapide que la fréquence des commandes en azimut au lever et au coucher du soleil. De cette manière, les fréquences d'émission des commandes vers les actionneurs 8 et 11 sont optimisées.

Selon un autre perfectionnement, la carte de contrôle 30 reçoit du serveur distant une information signalant des conditions atmosphériques particulières, un vent violent par exemple, nécessitant une mise en sécurité des panneaux. Dès la réception de cette information, la carte de contrôle 30 commande les actionneurs 8 et 11 pour orienter les panneaux selon une position de mise en sécurité, à l'horizontal par exemple.

Selon un autre perfectionnement, la carte de contrôle 30 peut communiquer avec un appareil qui consomme l'énergie produite par ledit système. Dans le même temps, la carte de contrôle 30 peut recevoir du serveur distant des prévisions météorologiques qui permettent d'évaluer la production électrique du système 1 au cours des prochaines 24 heures, par exemple. La carte de contrôle peut ainsi transmettre une information relative à la production électrique future à l'appareil qui peut la planifier et ainsi programmer plus tard une action consommant de l'électricité, telle que : la mise en route d'un chauffage, ou d'une pompe à chaleur, par exemple.

### 6.3 Variante de réalisation

La suite de ce document décrit une variante non préférée de réalisation, ne faisant pas partie de l'invention. Selon cette variante la mécanique d'orientation des panneaux est différente et la gestion des actionneurs est identique.

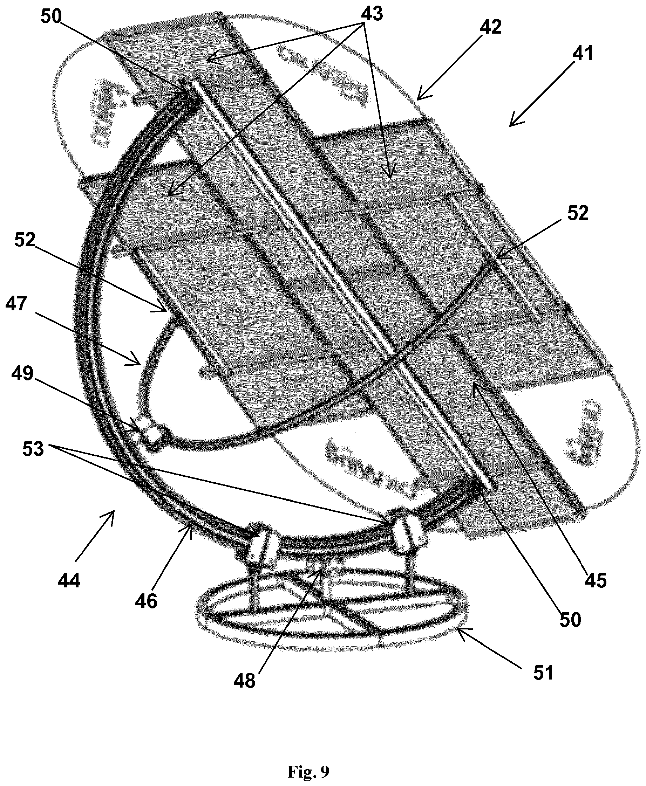

On présente maintenant, en relation avec la **Fig. 9**, un exemple de vue en coupe d'un système de production d'énergie selon une variante non préférée de réalisation. Un tel système est conçu pour être installé sur le sol ou sur le toit d'un immeuble. Le système 41 comporte une surface plane 42 composée d'au moins un panneau solaire 43, ladite surface étant montée sur un support orientable 44. Ce support qui oriente la surface 42 de façon à pointer vers le soleil comporte un plateau 45 permettant la fixation des panneaux solaires et une monture composée de deux rails cintrés 46 et 47 dont les déplacements respectifs sont contrôlés par deux actionneurs 48 et 49. Les actionneurs étant typiquement des motoréducteurs commandés électriquement. Les extrémités du premier rail cintré 46 sont montées sur des éléments pivots 50 fixés à deux endroits du plateau 45, l'actionneur 48 déplaçant en rotation le rail cintré 46 est solidarisé avec une base 51 du système posé au sol. Les extrémités du second rail cintré 47 sont montées sur des éléments pivots 52 fixés à deux autres endroits du plateau 45. Un actionneur 50 déplaçant en rotation le rail cintré 47 est solidarisé au premier rail cintré 46, au milieu de celui-ci de préférence. Les projections des deux rails cintrés 46 et 47 sur le plan passant par la surface des panneaux se coupent, de préférence orthogonalement. Dans ce dernier cas, les deux droites passant par les éléments pivots 50 d'une part et par d'autres éléments pivots 52 d'autre part se coupent à angle droit. Cette disposition facilite les calculs pour orienter correctement la surface 42 face au soleil. La rotation du rail cintré 46 est guidée par des roulements à billes 53 fixés solidement à la base 51. La rotation des rails cintrés peut s'effectuer par une crémaillère fixée tout le long du rail qui est mise en mouvement par une roue crantée fixée sur le rotor d'un moteur électrique. Selon une variante de réalisation, l'entraînement s'effectue par une chaîne ou une courroie.

La cinématique du support orientable 44 pour que la normale de la surface 42 se trouve constamment orientée vers le soleil utilise un système de double inclinaison imbriquée et actionnée par deux rails cintrés et motorisés. Les deux rails cintrés 46 et 47 sont montés transversalement l'un de l'autre, les plans formés par chacun des deux rails cintrés se coupant de préférence selon un angle droit. Les actionneurs 48 et 49 sont commandés par une unité de contrôle (non représentée sur la **Fig. 9****)** entièrement autonome. Les signaux de commande électriques transmis aux actionneurs sont calculés en fonction du retour d'information provenant de capteurs et de paramètres d'inclinaison et d'orientation qui dépendent de la position du système et de l'heure courante. Les panneaux solaires sont reliés électriquement entre eux et à un onduleur (non représenté sur la **Fig. 9**) chargé de convertir le courant continu produit des panneaux en un courant alternatif compatible en tension et en fréquence avec celui du secteur. L'unité de contrôle comporte des capteurs destinés à fournir des données sur la situation du système 41 au sein de son environnement. Ces capteurs sont notamment :
- un module de géolocalisation du système (par exemple un module GPS),
- un capteur d'inclinaison droite gauche (fournissant l'écart par rapport au plan horizontal d'une première droite parallèle au plan formé par la base),
- un capteur d'inclinaison avant arrière (fournissant l'écart par rapport au plan horizontal d'une droite parallèle au plan formé par la base et perpendiculaire à la première droite).

Les capteurs d'inclinaison sont typiquement des gyroscopes électroniques qui sont éventuellement rassemblés dans un seul composant. Le module de géolocalisation produit les données GPS_Ing de longitude en degré, et GPS_lat de latitude.

Selon un perfectionnement, les panneaux solaires 43 sont du type permettant de produire de l'électricité à partir d'un rayonnement reçu par les deux faces. La tringlerie constituant le plateau 45 est suffisamment fine pour laisser passer le maximum de rayonnement à l'arrière des panneaux.

La base 51 est avantageusement une structure plane suffisamment lourde pour résister au vent. La structure peut éventuellement être lestée en y ajoutant des réservoirs remplis de liquide ou des blocs de matériau lourd, du béton par exemple. De cette manière, le système 41 est autoporté et peut s'installer très rapidement sur un sol plat. Selon une variante de réalisation, la base est constituée d'une surface en béton, un toit d'immeuble par exemple, et le support orientable 44 est fixé à cette surface par des scellements. Selon une variante de réalisation, l'ancrage peut être réalisé par des vis de scellement dans le sol (terre ou béton).

Ce système permet un déploiement prêt à l'emploi, selon un montage simple et préassemblé en usine, auto portant, sans fixation au sol ou réalisation de massif, pièces mécaniques avec détrompeur - manutention et installation pouvant être réalisée par une personne seule (particulier ou installateur). Ces performances sont élevées par l'utilisation de plusieurs technologies : suivi solaire sur deux axes, structure mécanique optimisée pour l'utilisation de panneaux bi face (récupération d'énergie par la face arrière). Ce système constitue un produit « tout en un » connecté à son environnement. Après raccordement au réseau internet, le système est entièrement autonome dans son fonctionnement et communique aisément avec les éléments qui l'entourent soit pour créer des alertes soit pour aider l'utilisateur dans sa démarche d'autoconsommation - meilleure valorisation du signal de production d'électricité.

Le système représenté sur la **Fig. 9** dispose de 4 panneaux photovoltaïques pour une surface totale de 8,5 mètres carré. La puissance de base produite par ce système est typiquement de 1560Wc. Il est bien évident que ces chiffres ne sont donnés qu'à titre d'exemple et ne constitue en rien des limitations de la portée de l'invention.

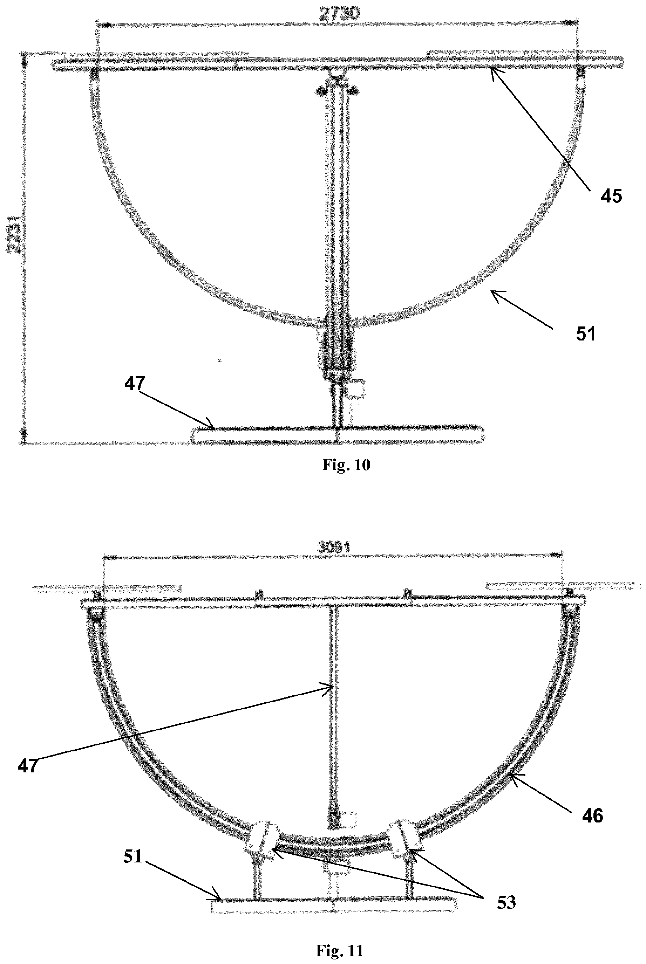

La **Fig. 10** présente une vue de face du système de monture pour orienter les panneaux solaires avec les dimensions du prototype réalisé. Selon cette vue, le rail 47 et sa forme circulaire sont clairement visibles. La position des panneaux à l'horizontal correspond à la position de sécurité, qui est recommandé en présence de vents violents.

La **Fig. 11** présente une vue de profil du système de monture pour orienter les panneaux solaires avec les dimensions du prototype réalisé. Selon cette vue, le rail 46 et sa forme circulaire sont clairement visibles. On peut également voir les deux roulements à billes 53 qui sont solidement fixés à la base 51 et guide la rotation du rail 46.

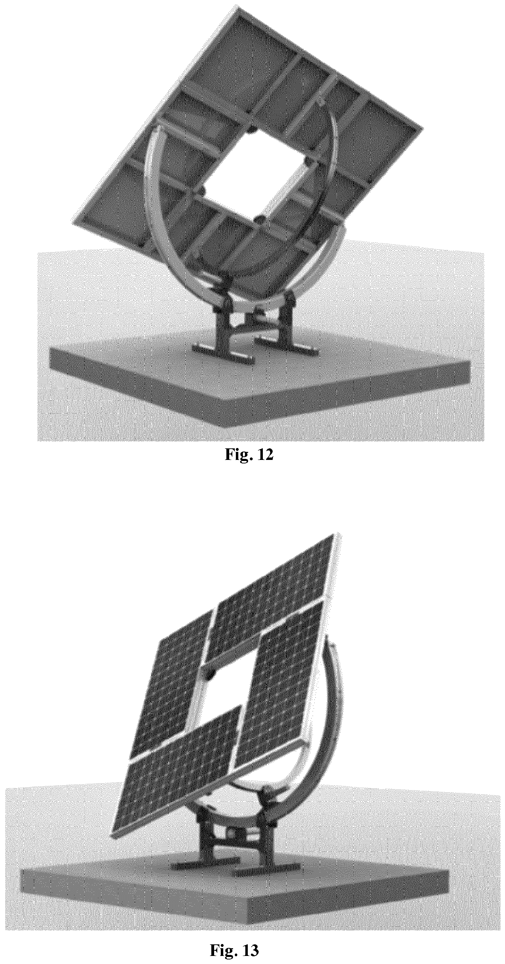

La **Fig. 12** représente une vue de l'arrière d'un système de production d'énergie présentant une autre configuration de panneaux. Selon ce système, les panneaux solaires sont disposés tout autour d'un espace vide en formant un carré.

La **Fig. 13** représente une vue de face de ce système de production d'énergie.

L'invention n'est pas limitée aux modes de réalisation qui viennent d'être décrits. En particulier, les panneaux peuvent utiliser toutes technologies pour produire de l'électricité et peuvent notamment utiliser une technologie mono-face.

## Revendications

1. Système de production d'énergie électrique comportant un mât (7) destiné à être ancré au sol, au moins un panneau solaire (3) fixé par ses bords dans un cadre orientable (2) pour former une surface plane et un moyen d'orientation dudit cadre pour pointer lesdits panneaux dans une direction déterminée, ledit moyen d'orientation comportant une base (4) en rotation autour du mât vertical à l'aide d'un premier actionneur (8), le cadre (2) étant monté pivotant sur la base rotative, faisant ainsi varier l'inclinaison du cadre, **caractérisé en ce que** ledit cadre (2) est doté d'un profilé (20) rectiligne comportant une gorge (22) s'étendant longitudinalement dans ledit profilé et dans lequel s'insère une vis sans fin (9) animée en rotation par un second actionneur (11), la vis sans fin étant doté d'un écrou (12) solidarisé par un pivot (13) à une extrémité d'une bielle (14), l'autre extrémité de ladite bielle (14) étant montée pivotante sur la base rotative (4), le déplacement de l'écrou le long de la vis sans fin (9) par la rotation du second actionneur (11) faisant varier l'inclinaison du cadre, le profilé (20) comprenant deux rails (24) de guidage en coulissement de l'écrou (12) qui s'étendent de chaque côté de la gorge (22) et bloquent la rotation de l'écrou (12) lorsque la vis sans fin (9) est animée en rotation.

2. Système de production d'énergie selon la revendication 1, **caractérisé en ce que** les deux rails (24) de guidage sont de section cylindrique, l'écrou (12) se prolongeant de chaque côté par deux coulisseaux (26) en forment d'arceaux qui viennent enserrer les rails (24).

3. Système de production d'énergie selon la revendication 1, **caractérisé en ce que** la bielle (14) s'insère dans ladite gorge (22) lorsque les panneaux sont dans une position la plus proche de l'horizontalité.

4. Système de production d'énergie selon l'une des revendications 1 à 3, **caractérisé en ce que** le second actionneur (11) est fixé à l'extrémité la plus basse de la vis sans fin lorsque les panneaux sont dans une position relevée.

5. Système de production d'énergie selon l'une quelconque des revendications précédentes, **caractérisé en ce que** le sommet de la base rotative (4) possède une forme oblongue et est inclinée vers l'arrière, le pivotement de la bielle (14) sur la base rotative étant assurée par une liaison pivot (15) fixée sur le pourtour de la base tournante (4) en son point le plus bas.

6. Système de production d'énergie selon l'une quelconque des revendications précédentes, **caractérisé en ce qu'**il comporte un moyen de contrôle (30) intégré comportant un moyen de géolocalisation (34), de préférence du type GPS, et un moyen de communication (37) avec un serveur distant, le moyen de contrôle émettant les coordonnées géographiques du système fournies par le moyen de géolocalisation et recevant du serveur les coordonnées de pointage du support en fonction du lieu et d'une information horaire également transmise, le moyen de contrôle (30) commandant les motorisations pour orienter les panneaux à l'aide de coordonnées transmises.

7. Système de production d'énergie selon la revendication 6, **caractérisé en ce que** le moyen de contrôle (30) émet à intervalle régulier des informations de fonctionnement au serveur distant, dont la quantité d'énergie produite.

8. Système de production d'énergie selon la revendication 6 ou 7, **caractérisé en ce que** le moyen de contrôle (30) commande régulièrement les motorisations en azimut et en élévation pour orienter les panneaux, la fréquence des commandes en azimut étant plus rapide que la fréquence des commandes en élévation à la mi-journée et, la fréquence des commandes en élévation étant plus rapide que la fréquence des commandes en azimut au lever et au coucher du soleil.

9. Système de production d'énergie l'une quelconque des revendications 6 à 8, **caractérisé en ce que** le moyen de contrôle (30) commande les actionneurs (8, 11) pour orienter les panneaux selon une position de mise en sécurité consécutivement à la réception d'un signal du serveur signalant des conditions atmosphériques particulières.

10. Système de production d'énergie selon l'une quelconque des revendications 6 à 9, **caractérisé en ce qu'**il comporte un moyen de transmission d'information vers un appareil destiné à consommer l'énergie produite par ledit système, le moyen de contrôle recevant des informations impactant la production d'énergie du système au cours d'une durée commençant à partir du moment présente et émettant vers ledit appareil des prévisions de production d'énergie au cours de cette durée.

11. Système de production d'énergie selon l'une quelconque des revendications précédentes, **caractérisé en ce qu'**il comporte un inclinomètre deux axes et une horloge, ledit moyen de contrôle calculant les données de commandes des deux motorisations en fonction des données d'inclinaison fournies par le capteur, de coordonnées de pointage du support élaborées en fonction du lieu où se situe le système et de l'heure et de la date fournie par l'horloge.

12. Système de production d'énergie selon l'une quelconque des revendications précédentes, **caractérisé en ce que** les panneaux sont du type produisant de l'énergie par un rayonnement reçu des deux côtés.

## Patentansprüche

1. System zur Produktion elektrischer Energie, umfassend einen Mast (7), der dazu ausgelegt ist, im Boden verankert zu sein, mindestens ein Solarmodul (3), das mit seinen Rändern in einem ausrichtbaren Rahmen (2) befestigt ist, um eine ebene Oberfläche zu bilden, und ein Mittel zum Ausrichten des Rahmens, um die Module in eine bestimmte Richtung zeigen zu lassen, wobei das Ausrichtungsmittel eine Basis (4) umfasst, die sich mit Hilfe eines ersten Stellglieds (8) um den vertikalen Mast drehen kann, wobei der Rahmen (2) schwenkbar an der Drehbasis angebracht ist, sodass die Neigung des Rahmens verändert werden kann,
**dadurch gekennzeichnet, dass** der Rahmen (2) ein geradliniges Profil (20) mit einer Nut (22) aufweist, die sich längs in dem Profil erstreckt und in die sich eine Schnecke (9) einfügt, die von einem zweiten Stellglied (11) in Drehung versetzt wird, wobei die Schnecke eine Mutter (12) aufweist, die mittels eines Drehzapfens (13) mit einem Ende einer Stange (14) verbunden ist, wobei das andere Ende der Stange (14) schwenkbar an der Drehbasis (4) angebracht ist, wobei die Verschiebung der Mutter entlang der Schnecke (9) durch die Drehung des zweiten Stellglieds (11) die Neigung des Rahmens verändert, wobei das Profil (20) zwei Schienen (24) zur gleitbeweglichen Führung der Mutter (12) umfasst, die sich auf jeder Seite der Nut (22) erstrecken und in dem Fall, dass die Schnecke (9) in Drehung versetzt wird, die Drehung der Mutter (12) blockieren.

2. Energieproduktionssystem nach Anspruch 1, **dadurch gekennzeichnet, dass** die zwei Führungsschienen (24) einen zylindrischen Querschnitt aufweisen, wobei sich die Mutter (12) auf jeder Seite durch zwei bogenförmige Gleithülsen (26), die die Schienen (24) umschließen, fortsetzt.

3. Energieproduktionssystem nach Anspruch 1, **dadurch gekennzeichnet, dass** sich die Stange (14) in die Nut (22) einfügt, für den Fall, dass sich die Module in einer Position befinden, die der Horizontalen am nächsten kommt.

4. Energieproduktionssystem nach einem der Ansprüche 1 bis 3, **dadurch gekennzeichnet, dass** das zweite Stellglied (11) an dem untersten Ende der Schnecke befestigt ist, für den Fall, dass sich die Module in einer angehobenen Position befinden.

5. Energieproduktionssystem nach einem der vorhergehenden Ansprüche, **dadurch gekennzeichnet, dass** die Oberseite der Drehbasis (4) eine längliche Form besitzt und nach hinten geneigt ist, wobei das Schwenken der Stange (14) auf der Drehbasis durch eine Drehzapfenverbindung (15), die am Umfang der Drehbasis (4) an ihrem untersten Punkt befestigt ist, sichergestellt wird.

6. Energieproduktionssystem nach einem der vorhergehenden Ansprüche, **dadurch gekennzeichnet, dass** es ein integriertes Steuermittel (30) umfasst, das ein Geolokalisierungsmittel (34), vorzugsweise vom Typ GPS, und ein Mittel zur Kommunikation (37) mit einem entfernten Server umfasst, wobei das Steuermittel die geographischen Koordinaten des Systems, die von dem Geolokalisierungsmittel geliefert werden, ausgibt und von dem Server die Koordinaten zum Ausrichten des Trägers in Abhängigkeit von dem Standort und einer ebenfalls übertragenen Zeitinformation empfängt, wobei das Steuermittel (30) die motorisierten Bewegungen ansteuert, um die Module mit Hilfe der übertragenen Koordinaten auszurichten.

7. Energieproduktionssystem nach Anspruch 6, **dadurch gekennzeichnet, dass** das Steuermittel (30) regelmäßig Betriebsinformationen an den entfernten Server ausgibt, darunter auch die Menge an produzierter Energie.

8. Energieproduktionssystem nach Anspruch 6 oder 7, **dadurch gekennzeichnet, dass** das Steuermittel (30) die motorisierten Azimut- und Elevationsbewegungen regelmäßig ansteuert, um die Module auszurichten, wobei die Frequenz der Azimutansteuerungen mittags größer als die Frequenz der Elevationsansteuerungen ist und wobei die Frequenz der Elevationsansteuerungen bei Sonnenauf- und -untergang größer als die Frequenz der Azimutansteuerungen ist.

9. Energieproduktionssystem nach einem der Ansprüche 6 bis 8, **dadurch gekennzeichnet, dass** das Steuermittel (30) im Anschluss an das Empfangen eines Signals von dem Server, das besondere Witterungsbedingungen ankündigt, die Stellglieder (8, 11) ansteuert, um die Module gemäß einer Sicherungsposition auszurichten.

10. Energieproduktionssystem nach einem der Ansprüche 6 bis 9, **dadurch gekennzeichnet, dass** es ein Mittel zum Übertragen von Informationen zu einer Einrichtung, die dazu ausgelegt ist, die von dem System produzierte Energie zu verbrauchen, umfasst, wobei das Steuermittel Informationen empfängt, die die Energieproduktion des Systems während eines Zeitraums, der zum aktuellen Zeitpunkt beginnt, beeinflussen, und Energieproduktionsvorhersagen für diesen Zeitraum an die Einrichtung ausgibt.

11. Energieproduktionssystem nach einem der vorhergehenden Ansprüche, **dadurch gekennzeichnet, dass** es einen Zwei-Achsen-Neigungsmesser und eine Uhr umfasst, wobei das Steuermittel die Ansteuerungsdaten für die zwei motorisierten Bewegungen in Abhängigkeit von den durch den Sensor bereitgestellten Neigungsdaten, von Koordinaten zum Ausrichten des Trägers, die in Abhängigkeit von dem Standort, an dem sich das System befindet, ermittelt werden, und der Uhrzeit und dem Datum, die von der Uhr bereitgestellt werden, berechnet.

12. Energieproduktionssystem nach einem der vorhergehenden Ansprüche, **dadurch gekennzeichnet, dass** die Module von dem Typ sind, der Energie durch Strahlung, die auf beiden Seiten empfangen wird, produziert.

## Claims

1. Electrical energy production system including a mast (7) intended to be anchored to the ground, at least one solar panel (3) attached by the edges thereof in an orientable frame (2) to form a planar surface and a means of orienting said frame to point said panels in a determined direction, said orienting means including a base (4) rotating about the vertical mast by way of a first actuator (8), the frame (2) being mounted such that it pivots on the rotating base, thus varying the inclination of the frame, **characterised in that** said frame (2) is provided with a rectilinear profile (20) including a groove (22) extending longitudinally in said profile and wherein an auger (9) is inserted and driven in rotation by a second actuator (11), the auger being provided with a nut (12) made integral via a pivot (13) with one end of a connecting rod (14), the other end of said connecting rod (14) being mounted such that it pivots on the rotating base (4), the displacement of the nut along the auger (9) by the rotation of the second actuator (11) causing the inclination of the frame to vary, the profile (20) comprising two rails (24) for guiding the sliding of the nut (12), which extend on either side of the groove (22) and block the rotation of the nut (12) when the auger (9) is driven in rotation.

2. Energy production system according to claim 1, **characterised in that** the two guide rails (24) have a cylindrical section, the nut (12) being continued on either side by two hoop-shaped slides (26) which clamp the rails (24).

3. Energy production system according to claim 1, **characterised in that** the connecting rod (14) is inserted into said groove (22) when the panels are in a position closest to the horizontal.

4. Energy production system according to one of claims 1 to 3, **characterised in that** the second actuator (11) is attached to the lowest end of the auger when the panels are in a raised position.

5. Energy production system according to any one of the preceding claims, **characterised in that** the tip of the rotating base (4) has an oblong shape and is inclined backwards, the pivoting of the connecting rod (14) on the rotating base being procured by a pivot link (15) attached on the periphery of the rotating base (4) at the lowest point thereof.

6. Energy production system according to any one of the preceding claims, **characterised in that** it includes an integrated control means (30) including a position determination means (34), preferably of the GPS type, and a means of communication (37) with a remote server, the control means transmitting the geographical coordinates of the system supplied by the position determination means and receiving, from the server, the pointing coordinates of the support as a function of the location and of a time information which is also transmitted, the control means (30) controlling the motorisations in order to orient the panels with the aid of the coordinates transmitted.

7. Energy production system according to claim 6, **characterised in that** the control means (30) transmits operating information to the remote server at regular intervals, including the amount of energy produced.

8. Energy production system according to claim 6 or 7, **characterised in that** the control means (30) regularly controls the azimuth and elevation motorisations to orient the panels, the frequency of the azimuth commands being greater than the frequency of the elevation commands at midday, and the frequency of the elevation commands being greater than the frequency of the azimuth commands at sunrise and sunset.

9. Energy production system according to any one of claims 6 to 8, **characterised in that** the control means (30) controls the actuators (8, 11) so as to orient the panels into a safety position following the receipt of a signal from the server reporting specific atmospheric conditions.

10. Energy production system according to any one of claims 6 to 9, **characterised in that** it includes means for transmitting information to a device intended to consume the energy produced by said system, the control means receiving information affecting the energy production of the system over a period of time starting from the present moment and transmitting to said device energy production forecasts over this period of time.

11. Energy production system according to any one of the preceding claims, **characterised in that** it includes a dual-axis inclinometer and a clock, said control means computing the control data of the two motorisations as a function of the inclination data supplied by the sensor, the pointing coordinates of the support produced as a function of the location of the system and the time and date supplied by the clock.

12. Energy production system according to any one of the preceding claims, **characterised in that** the panels are of the type that produce energy by radiation received from both sides.
